# EUROPEAN PATENT APPLICATION

(11) **EP 4 818 112 A1**
(43) Date of publication of application: **07.10.2026**
(21) Application number: 25179539.9
(22) Date of filing: 28.05.2025
(51) Int. Cl.: C01B 3/04, C01B 3/24, B01J 19/08

(54) **HYDROGEN GENERATION APPARATUS**

(30) Priority: 02.04.2025 TW 114112906
(71) Applicant: Wen-Ta, Kuo, Taipei City 111004 (TW)
(72) Inventor: Wen-Ta, Kuo, Taipei City 111004 (TW)
(74) Representative: Zimmermann, Tankred Klaus

(57) **Abstract**

A hydrogen generation apparatus includes a hydrogen generator, a primary coil circuit, a hydrogen compressor, and a hydrogen storage cylinder. The hydrogen generator includes a hydrogen generator body, a secondary coil, and an eddy current generating unit. The hydrogen generator body has a chamber, and is configured with a first inlet for introducing a first substance, a second inlet for introducing a second substance, an outlet and an exhaust port. The secondary coil is wound around the hydrogen generator body. The eddy current generating unit is disposed in the chamber corresponding to the secondary coil. The primary coil circuit is coupled to the secondary coil to induce the secondary coil to generate a high-voltage alternating current, thereby causing the eddy current generating unit to generate an eddy current and produce high temperature. A thermal cracking reaction is induced by the high temperature to generate hydrogen gas.

## Description

### BACKGROUND

### Technology Field

The present invention relates to a hydrogen generation apparatus that can prepare the ready-to-use hydrogen gas.

### Description of Related Art

Under the global trend of energy diversification and sustainable development, hydrogen energy has gradually become a focused new energy source. Hydrogen has a high energy density and produces only water after burning, so it is considered an extremely clean and environmentally friendly energy solution. Compared with traditional fuels, hydrogen energy not only reduces dependence on fossil fuels, but also can make up for the intermittent power supply problems caused by unstable weather conditions of renewable energy such as solar and wind energies. In the advanced fuel cell technology, hydrogen energy can be widely used in transportation, industrial processes, and power storage. Especially in industries that are difficult to fully electrify, such as heavy industry and long-distance transportation, hydrogen energy has demonstrated irreplaceable flexibility and potential.

Although hydrogen energy has a promising future, it is currently difficult to directly apply hydrogen energy to ordinary households. This is because that hydrogen is highly flammable and explosive, which poses a huge challenge to home safety design. In addition, the lack of complete hydrogen distribution and storage infrastructure makes it difficult for hydrogen energy to enter household systems like natural gas or electricity. Furthermore, hydrogen energy technology is still in the development stage, and has a high cost in implementation. Therefore, either the fuel cell device or the hydrogen supply is a heavy burden for ordinary households. After all, most household appliances are not yet designed to use hydrogen energy, and the hydrogen energy system cannot directly replace existing energy usage habits. These technical, cost and safety factors limit the speed at which hydrogen energy can be popularized at the household level.

As mentioned above, in order to truly use hydrogen energy in ordinary households, the first challenge to be solved is the technical challenge. The first topic is the safety and stability of hydrogen storage technology. Current high-pressure hydrogen storage or liquid hydrogen storage requires specific materials and strict control to avoid the risk of gas leakage or explosion. Secondly, hydrogen energy devices for household application must be miniaturized and modularized. For example, fuel cell systems should have the features of high efficiency, low noise and long-term stable operation. In addition, if hydrogen gas is to be produced and used inside the house, the exhaustion, ventilation and sensing technologies must be considered to ensure safety. Another key issue is user acceptance and ease of operation. If the hydrogen energy system is too complex or requires frequent maintenances, it will not be conducive to adoption in the household application. Therefore, in the considerations of storage method, equipment design and user interface, "simple, safe and stable" must be the premise to truly implement the daily application of hydrogen energy in households.

Hydrogen energy plays an important role as future clean energy and has huge application potential. However, if it is to be truly popularized in households, it still needs to overcome many technical and institutional barriers. Therefore, it is desired, in the perspectives of safety facilities and cost control, to provide a hydrogen generation apparatus for preparing the ready-to-use hydrogen gas.

### SUMMARY

In view of the foregoing, an objective of this invention is to provide a hydrogen generation apparatus that has a simple structure and can prepare the ready-to-use hydrogen gas.

To achieve the above, a hydrogen generation apparatus of this invention includes a hydrogen generator, a primary coil circuit, a hydrogen compressor, and a hydrogen storage cylinder. The hydrogen generator includes a hydrogen generator body, a secondary coil, and an eddy current generating unit. The hydrogen generator body has a chamber. One end of the hydrogen generator body is configured with a first inlet for introducing a first substance into the chamber and a second inlet for introducing a second substance into the chamber, and the other end of the hydrogen generator body is configured with an outlet and an exhaust port. The secondary coil is wound at the exterior of the hydrogen generator body. The eddy current generating unit is disposed in the chamber and located corresponding to a position where the secondary coil is wound. The primary coil circuit is coupled to the secondary coil. The primary coil circuit is configured to induce the secondary coil to generate a high-voltage alternating current, and then the high-voltage alternating current causes the eddy current generating unit to generate an eddy current. The eddy current enables the eddy current generating unit to produce a high temperature. The first substance and/or the second substance undergo a thermal cracking reaction induced by the high temperature to generate hydrogen gas, and the hydrogen gas is outputted through the outlet of the hydrogen generator to the hydrogen compressor. The hydrogen compressor is configured to compress the hydrogen gas, and the compressed hydrogen gas is stored in the hydrogen storage cylinder.

In one embodiment, the hydrogen generator further includes at least one support member. The support member is formed with a support hole and a plurality of through holes, and the eddy current generating unit penetrates through the support hole so as to be arranged in the chamber.

In one embodiment, a working voltage of the primary coil circuit is between 12V and 24V, and a voltage generated by the secondary coil is between 50KV and 200KV.

In one embodiment, the high temperature generated by the eddy current generating unit is between 1000 °C and 1600 °C.

In one embodiment, the hydrogen generator body is made of quartz material or ceramic material.

In one embodiment, the first inlet is configured with a first nozzle, and the second inlet is configured with a second nozzle.

In one embodiment, the first substance comprises methane, ethane, propane, butane, methanol, ethanol, ammonia, gaseous water molecules, or water mist.

In one embodiment, the second substance comprises methane, ethane, propane, butane, methanol, ethanol, ammonia, gaseous water molecules, or water mist.

In one embodiment, the eddy current generating unit includes a column, at least one fixing member, and a refractory conductive material. The refractory conductive material includes a refractory metal or a refractory metal alloy, and the refractory conductive material is disposed inside the column by the fixing member.

In one embodiment, the refractory metal includes tungsten, molybdenum, or tantalum, and the refractory metal alloy includes tungsten alloy, molybdenum alloy, or tantalum alloy.

In one embodiment, the column is made of quartz material or ceramic material.

In one embodiment, the hydrogen generator further includes a hydrogen separation membrane disposed in the chamber and located between the outlet and the exhaust port, and the hydrogen separation membrane includes a ceramic membrane or a metal-ceramic composite membrane.

In one embodiment, the hydrogen generation apparatus further includes a water atomizing device or a water vaporizing device.

In one embodiment, the water atomizing device includes a water tank and an atomizer connected to the water tank. The water tank is configured to store a certain amount of water. The atomizer is configured to atomize the water and introduces the atomized water (water mist) into the chamber through the first inlet or the second inlet.

In one embodiment, the water vaporizing device includes a water tank and a vaporizer connected to the water tank. The water tank is configured to store a certain amount of water. The vaporizer is configured to vaporize the water and introduces the vaporized water (gaseous water molecules) into the chamber through the first inlet or the second inlet.

In one embodiment, the hydrogen compressor includes a piston compressor or a scroll compressor.

As mentioned above, in the hydrogen generation apparatus of this invention, the hydrogen generator can utilize high temperature to induce the thermal cracking of the first substance or the second substance, and to generate a water-gas shift reaction with the first or second substance and the water mist or gaseous water molecules to produce hydrogen gas, and the produced hydrogen gas can be store in the hydrogen storage cylinder. Accordingly, the user can directly use the hydrogen gas stored in the hydrogen storage cylinder. If the gas pressure in the hydrogen storage cylinder becomes low, the hydrogen generation apparatus can immediately operate to generate new hydrogen gas and fill the new hydrogen gas into the hydrogen storage cylinder. Therefore, the hydrogen generation apparatus of the present invention can achieve the ready-to-use of hydrogen gas.

### BRIEF DESCRIPTION OF THE DRAWINGS

The invention will become more fully understood from the detailed description and accompanying drawings, which are given for illustration only, and thus are not limitative of the present invention, and wherein:
FIG. 1 is a schematic diagram showing a hydrogen generation apparatus of this invention;
FIG. 2 is a sectional view of the hydrogen generator of the hydrogen generation apparatus of this invention;
FIG. 2A is a top view (viewing from the direction B) of a support member of the hydrogen generator;
FIG. 2B is a top view (viewing from the direction B) of another support member of the hydrogen generator;
FIG. 3 is a schematic diagram showing another hydrogen generation apparatus of this invention;
FIG. 4 is a schematic diagram showing that the hydrogen generation apparatus of this invention is arranged in a housing; and
FIG. 5 is a schematic diagram showing that most parts of the hydrogen generation apparatus of this invention, except the hydrogen storage cylinder, are arranged in a housing.

### DETAILED DESCRIPTION OF THE INVENTION

The present invention will be apparent from the following detailed description, which proceeds with reference to the accompanying drawings, wherein the same references relate to the same elements.

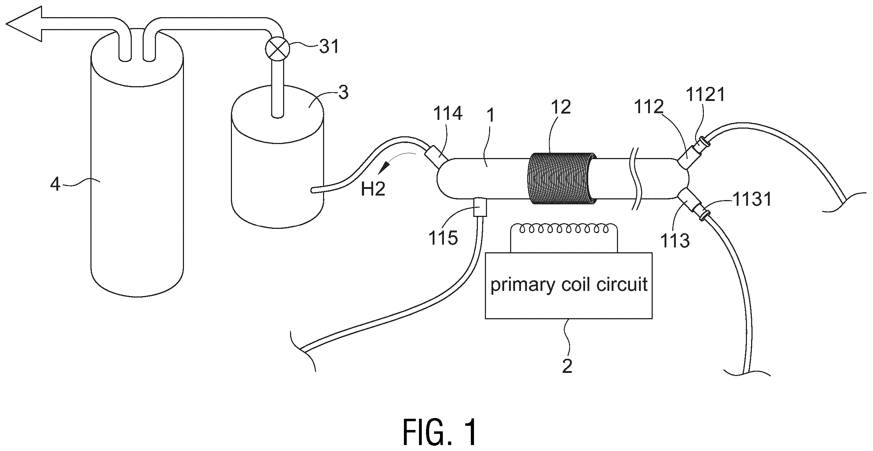

As shown in FIG. 1, a hydrogen generation apparatus of this invention includes a hydrogen generator 1, a primary coil circuit 2, a hydrogen compressor 3, and a hydrogen storage cylinder 4. In this embodiment, the hydrogen compressor 3 can be a piston compressor or a scroll compressor, and the hydrogen storage cylinder 4 can be a low-pressure storage cylinder.

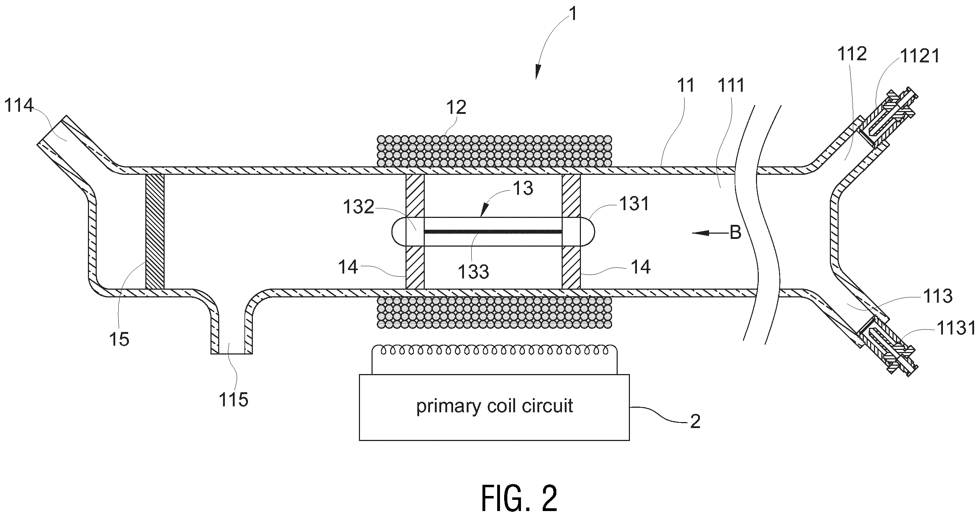

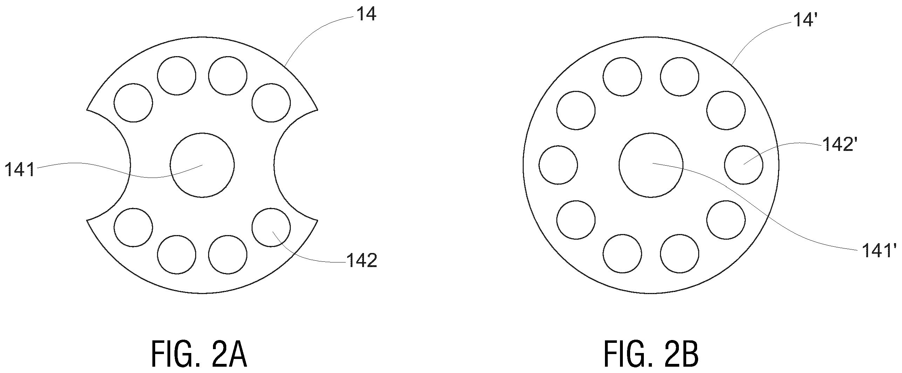

As shown in FIG. 2, the hydrogen generator 1 includes a hydrogen generator body 11, a secondary coil 12, and an eddy current generating unit 13. The hydrogen generator body 11 can be made of quartz material or ceramic material. The hydrogen generator body 11 has a chamber 111. One end of the hydrogen generator body 11 is configured with a first inlet 112 for introducing a first substance into the chamber 111 and a second inlet 113 for introducing a second substance into the chamber 111, and the other end of the hydrogen generator body 11 is configured with an outlet 114 and an exhaust port 115. The secondary coil 12 is wound at the exterior of the hydrogen generator body 11. The eddy current generating unit 13 is disposed in the chamber 111 and located corresponding to a position where the secondary coil 12 is wound.

Referring to FIG. 2 in view of FIG. 2A (viewing from the direction B), in this embodiment, the hydrogen generator 1 further includes two support members 14. The support member 14 is formed with a support hole 141 and a plurality of through holes 142. The eddy current generating unit 13 penetrates through the support hole 141 so as to be arranged in the chamber 111, and the first substance and/or the second substance can pass through the through holes 142. In another case, the support member may have a shape as shown in FIG. 2B. As shown in FIG. 2B, the support member 14' is formed with a support hole 141' and a plurality of through holes 142'. To be noted, the shape of the support member is designed to support or hold the eddy current generating unit 13 and to allow the first substance and/or the second substance to pass through. In this embodiment, each of the first substance and the second substance can include methane, ethane, propane, butane, methanol, ethanol, ammonia, gaseous water molecules, or water mist.

Referring to FIGS. 1 and 2, the primary coil circuit 2 is coupling to the secondary coil 12 of the hydrogen generator 1 and enables the secondary coil 12 to generate a high-voltage alternating current. The high-voltage alternating current induces an alternating electromagnetic field in the chamber 111 of the hydrogen generator body 11 to cause the eddy current generating unit 13 to generate an eddy current. This can cause the eddy current generating unit 13 to generate a high temperature. The first substance and/or the second substance can undergo a thermal cracking reaction induced by the high temperature to generate hydrogen gas (H₂), and the hydrogen gas is outputted through the outlet 114 of the hydrogen generator 1 to the hydrogen compressor 3. The hydrogen compressor 3 can compress the hydrogen gas, and the compressed hydrogen gas is stored in the hydrogen storage cylinder 4. In this embodiment, the working voltage of the primary coil circuit 2 is between 12V and 24V, and the voltage generated by the secondary coil 12 is between 50KV and 200KV. The high temperature generated by the eddy current generating unit 13 is between 1000 °C and 1600 °C.

Referring to FIG. 2, in this embodiment, the eddy current generating unit 13 includes a column 131, two fixing members 132, and a refractory conductive material 133. The column 131 is made of quartz material or ceramic material. The refractory conductive material 133 may include a refractory metal or a refractory metal alloy, and the refractory conductive material 133 is disposed inside the column 131 by the fixing members 132. To be noted, the refractory metal includes tungsten, molybdenum, or tantalum, and the refractory metal alloy includes tungsten alloy, molybdenum alloy, or tantalum alloy.

As shown in FIG. 2, in this embodiment, the hydrogen generator 1 may further include a hydrogen separation membrane 15. The hydrogen separation membrane 15 may include a ceramic membrane or a metal-ceramic composite membrane. In this case, the hydrogen separation membrane 15 can be disposed in the chamber 111 and located between the outlet 114 and the exhaust port 115. The configuration of the hydrogen separation membrane 15 may allow the hydrogen gas to pass therethrough and be discharged through the outlet 114, and prevent the side products to pass through, so that the side products can be discharged through the exhaust port 115.

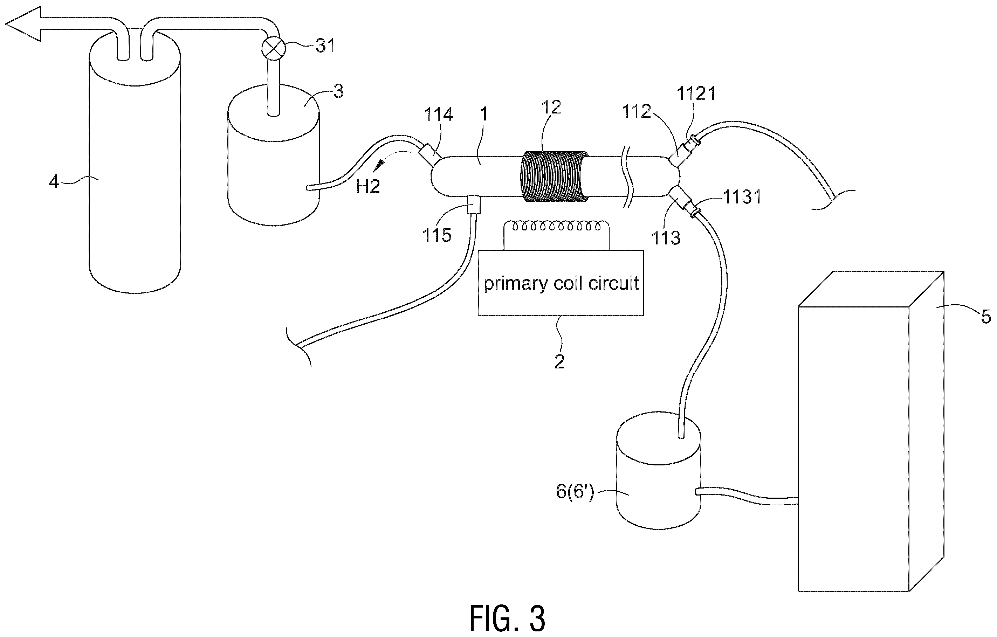

Referring to FIG. 2 or 3, the first inlet 112 can be configured with a first nozzle 1121, and the second inlet 113 is configured with a second nozzle 1131. In addition, the hydrogen generation apparatus of this invention may further include a water atomizing device (ultrasonic wave) or a water vaporizing device. In the case that the hydrogen generation apparatus includes a water atomizing device, the water atomization device may include a water tank 5 and an atomizer 6. The atomizer 6 is, for example, a high-pressure atomizer or an ultrasonic atomizer, which is connected to the water tank 5 and is configured to atomize water and introduce the atomized water into the chamber 111 through the first inlet 112 or the second inlet 113. In another case that the hydrogen generation apparatus includes a water vaporizing device, the water vaporizing device may include a water tank 5 and a vaporizer 6'. The vaporizer 6' is connected to the water tank 5, and is configured to vaporize the water and introduce the vaporized water into the chamber 111 through the first inlet 112 or the second inlet 113.

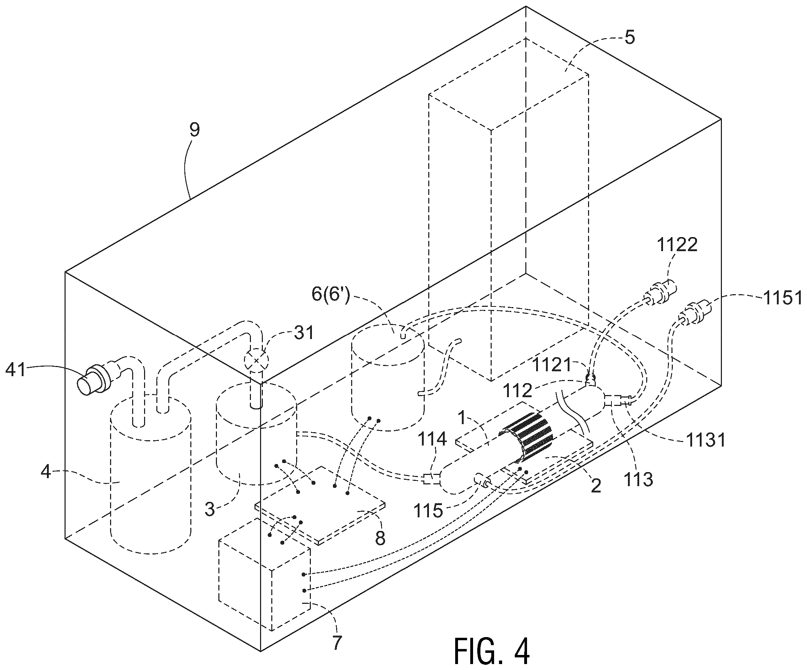

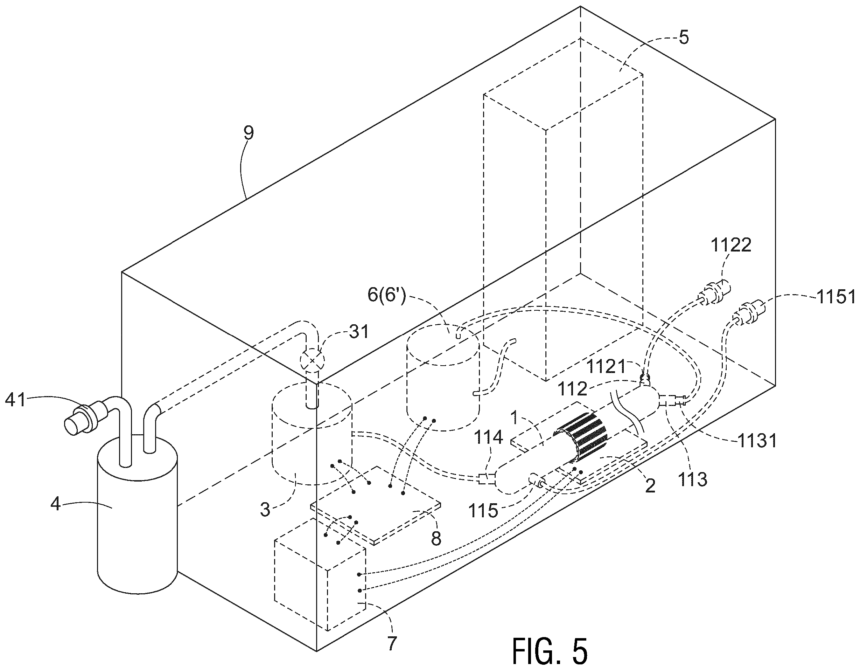

With reference to FIG. 4, the hydrogen generation apparatus of this invention may further include a power supply 7, a central control circuit 8, and a housing 9. The power supply 7 is electrically connected to the primary coil circuit 2 and the central control circuit 8 respectively, and provides a voltage of 12V-24V to the primary coil circuit 2 and the central control circuit 8. The central control circuit 8 is electrically connected to the primary coil circuit 2, the atomizer 6 (or the vaporizer 6'), and the hydrogen compressor 3, and controls their operations individually. The above-mentioned hydrogen generator 1, primary coil circuit 2, hydrogen compressor 3, hydrogen storage cylinder 4, water tank 5, atomizer 6, power supply 7, and central control circuit 8 are arranged in a housing 9. To be noted, as shown in FIG. 5, the hydrogen storage cylinder 4 may be arranged outside the housing 9.

Referring to FIG. 4, when the first substance is methane and the second substance is water mist (or gaseous water molecules), methane is inputted through a connector 1122 assembled on the housing 9, and is sprayed into the chamber 111 from the first inlet 112 after passing through the first nozzle 1121. In addition, the water in the water tank 5 is first processed by the atomizer 6 (or vaporizer 6'), and the atomized or vaporized water is sprayed into the chamber 111 through the second inlet 113 after passing through the second nozzle 1131. Then, the methane gas and the atomized or vaporized water will flow through the high-temperature area where the eddy current generating unit 13 is located, so that the methane recombination reaction and the water-gas shift reaction of the methane can be induced so as to produce hydrogen and carbon dioxide. The chemical reactions are shown in the following reaction formula (1) and formula (2).

*CH*₄ + *H*₂*O* → *CO* + 3*H*₂ formula (1)

*CO* + *H*₂*O* → *CO*₂ + *H*₂ formula (2)

As mentioned above, the hydrogen gas (H₂) produced by thermal cracking can be discharged to the hydrogen compressor 3 through the outlet 114, and the compressed hydrogen gas is further stored in the hydrogen storage cylinder 4 for use later. Generally speaking, the user may use the connector 41 to retrieve the hydrogen gas from the hydrogen storage cylinder 4. The carbon dioxide produced as a side product is discharged to the outside through the exhaust port 115 and the connector 1151 provided on the housing 9. To be noted, when the hydrogen storage cylinder 4 is fulfilled by the generated hydrogen gas, the central control circuit 8 will control to close the control valve 31 of the hydrogen compressor 3 and suspend the operation of the hydrogen compressor 3. At this time, the central control circuit 8 will also control the primary coil circuit 2 and the atomizer 6 to suspend the operation of the hydrogen generator 1.

In summary, in the hydrogen generation apparatus of this invention, the hydrogen generator 1 can generate high temperature to induce the thermal cracking of the first substance or the second substance, and to generate a water-gas shift reaction with the first or second substance and the water mist or gaseous water molecules to produce hydrogen gas, and the produced hydrogen gas can be store in the hydrogen storage cylinder 4. Accordingly, the user can directly use the hydrogen gas stored in the hydrogen storage cylinder 4. If the gas pressure in the hydrogen storage cylinder 4 becomes low, the hydrogen generation apparatus can immediately operate to generate new hydrogen gas and fill the new hydrogen gas into the hydrogen storage cylinder 4. Therefore, the hydrogen generation apparatus of the present invention can achieve the ready-to-use of hydrogen gas.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A hydrogen generation apparatus, comprising:
a hydrogen generator comprising a hydrogen generator body, a secondary coil, and an eddy current generating unit, wherein the hydrogen generator body has a chamber, one end of the hydrogen generator body is configured with a first inlet for introducing a first substance into the chamber and a second inlet for introducing a second substance into the chamber, another end of the hydrogen generator body is configured with an outlet and an exhaust port, the secondary coil is wound at an exterior of the hydrogen generator body, and the eddy current generating unit is disposed in the chamber and located corresponding to a position where the secondary coil is wound;
a primary coil circuit coupled to the secondary coil, wherein the primary coil circuit is configured to induce the secondary coil to generate a high-voltage alternating current, the high-voltage alternating current causes the eddy current generating unit to generate an eddy current, the eddy current enables the eddy current generating unit to produce a high temperature, the first substance and/or the second substance undergo a thermal cracking reaction induced by the high temperature to generate hydrogen gas, and the hydrogen gas is outputted through the outlet of the hydrogen generator;
a hydrogen compressor connected to the outlet of the hydrogen generator, wherein the hydrogen compressor is configured to compress the hydrogen gas; and
a hydrogen storage cylinder connected to the hydrogen compressor, wherein compressed hydrogen gas is stored in the hydrogen storage cylinder.

2. The hydrogen generation apparatus of claim 1, wherein the hydrogen generator further comprises at least one support member, the support member is formed with a support hole and a plurality of through holes, and the eddy current generating unit penetrates through the support hole so as to be arranged in the chamber.

3. The hydrogen generation apparatus of claim 1, wherein a working voltage of the primary coil circuit is between 12V and 24V, and a voltage generated by the secondary coil is between 50KV and 200KV.

4. The hydrogen generation apparatus of claim 1, wherein the high temperature generated by the eddy current generating unit is between 1000 °C and 1600 °C.

5. The hydrogen generation apparatus of claim 1, wherein the hydrogen generator body is made of quartz material or ceramic material.

6. The hydrogen generation apparatus of claim 1, wherein the first inlet is configured with a first nozzle, and the second inlet is configured with a second nozzle.

7. The hydrogen generation apparatus of claim 1, wherein the first substance comprises methane, ethane, propane, butane, methanol, ethanol, ammonia, gaseous water molecules, or water mist.

8. The hydrogen generation apparatus of claim 1, wherein the second substance comprises methane, ethane, propane, butane, methanol, ethanol, ammonia, gaseous water molecules, or water mist.

9. The hydrogen generation apparatus of claim 1, wherein the eddy current generating unit comprises a column, at least one fixing member, and a refractory conductive material, the refractory conductive material comprises a refractory metal or a refractory metal alloy, and the refractory conductive material is disposed inside the column by the fixing member.

10. The hydrogen generation apparatus of claim 9, wherein the refractory metal comprises tungsten, molybdenum, or tantalum, and the refractory metal alloy comprises tungsten alloy, molybdenum alloy, or tantalum alloy.

11. The hydrogen generation apparatus of claim 9, wherein the column is made of quartz material or ceramic material.

12. The hydrogen generation apparatus of claim 1, wherein the hydrogen generator further comprises:
a hydrogen separation membrane disposed in the chamber and located between the outlet and the exhaust port, wherein the hydrogen separation membrane comprises a ceramic membrane or a metal-ceramic composite membrane.

13. The hydrogen generation apparatus of claim 1, further comprising:
a water atomizing device or a water vaporizing device.

14. The hydrogen generation apparatus of claim 13, wherein the water atomizing device comprises:
a water tank configured to store a certain amount of water; and
an atomizer connected to the water tank, wherein the atomizer is configured to atomize the water and introduces the atomized water into the chamber through the first inlet or the second inlet.

15. The hydrogen generation apparatus of claim 13, wherein the water vaporizing device comprises:
a water tank configured to store a certain amount of water; and
a vaporizer connected to the water tank, wherein the vaporizer is configured to vaporize the water and introduces the vaporized water into the chamber through the first inlet or the second inlet.

16. The hydrogen generation apparatus of claim 1, wherein the hydrogen compressor comprises a piston compressor or a scroll compressor.
